# FASCICULE DE BREVET EUROPEEN

(11) **EP 1 610 519 B1**
(45) Date de publication et mention de la délivrance du brevet: **18.08.2010**
(21) Numéro de dépôt: 04291575.1
(22) Date de dépôt: 22.06.2004
(51) Int. Cl.: H04L 29/06

(54) **Procédé de médiation entre applications de services web, et plate-forme de médiation pour la mise en oeuvre du procédé**
Verfahren und Plattform zum Vermittlen zwischen Web Services Anwendungen
Method and platform for mediation between web services applications.

(43) Date de publication de la demande: 28.12.2005
(73) Titulaire: FRANCE TELECOM, 75015 Paris (FR)
(72) Inventeur: Bregant-Belin, Pierre, 14700 Versainville (FR); Boule, Jean-Pierre, 14540 Soliers (FR)
(74) Mandataire: Loisel, Bertrand

(56) Documents cités:
- WO-A-00/77653
- US-A1- 2003 220 925
- US-A1- 2004 030 627

## Description

La présente invention concerne la communication entre applications hétérogènes coopérant sur un réseau, tel que l'Internet et/ou un Intranet, au moyen de Web services (WS).

Les WS facilitent l'accès à des applications hétérogènes entre des entreprises et simplifient ainsi les échanges de données. Par l'intermédiaire des WS, les applications peuvent interagir à travers le réseau, indépendamment de leur langage d'écriture et des plates-formes matérielles et logicielles sur lesquelles elles sont implantées.

Les WS sont des composants applicatifs accessibles sur Internet. Ils peuvent interagir dynamiquement avec d'autres applications en utilisant des protocoles de communication basés notamment sur le langage XML ("eXtended Markup Language"). Ces services mettent ainsi les applications à disposition sur Internet, sans requérir un développement complet de ces applications.

Les WS ont recours à un ensemble de standards basés sur le langage XML pour décrire les informations: la spécification UDDI ("Universal Description Discovery and Integration") pour permettre l'inscription automatique des services et leur recherche; la spécification SOAP ("Single Object Access Protocol") pour permettre à une application d'échanger des messages avec une autre application distante indépendamment de leur implémentation sous-jacente; et la spécification WSDL ("Web Service Description Language") pour permettre à une application de décrire l'interface permettant à une autre application de dialoguer avec elle selon la spécification SOAP.

Les WS sont référencés dans un annuaire UDDI et permettent de créer des applications distribuées et accessibles par d'autres applications. Pour faire appel à un WS, une application doit d'abord le découvrir dans l'annuaire UDDI, récupérer la description WSDL de son interface et connaître le ou les protocoles de communication qu'il comprend. C'est en général le protocole http ou https ou d'autres protocoles standard du Web. La désignation en est faite dans la description WSDL.

Actuellement, plusieurs éditeurs proposent des outils et des environnements permettant de développer une interface WS standard sur une application sous-jacente.

Certains éditeurs (par exemple Systinet, Microsoft, IBM) proposent des outils permettant de mettre en oeuvre un annuaire UDDI de services, et/ou proposent un annuaire de services opéré par eux. Avec ce type d'annuaire, il est possible à un fournisseur de publier les services qu'il destine à des clients potentiels et à un client de rechercher un service selon des critères proposés par l'annuaire.

D'autres éditeurs (par exemple Amberpoint, Flamenco) proposent des outils logiciels qui permettent de surveiller les messages SOAP échangés (par exemple temps de réponse, erreurs) et de leur appliquer certains traitements (par exemple reroutage, logging).

Des sociétés (par exemple British Telecom, Cable & Wireless) proposent des environnements de test ou d'hébergement de WS pour en améliorer la qualité.

D'autres sociétés (par exemple Grand Central) proposent un réseau fermé avec des outils propriétaires permettant d'apporter un certain nombre de garanties et de services au cours des échanges entre les fournisseurs et les clients de WS. L'approche fermée contraint les clients et les fournisseurs à devoir utiliser un réseau de communication spécifique.

Ces différents outils ont pour inconvénient de constituer des briques logicielles qui engendrent des difficultés en termes d'intégration et/ou de compatibilité. La mise en oeuvre des WS nécessite par conséquent des efforts importants du côté du client et du côté du fournisseur. Par ailleurs, différents aspects comme la sécurité, l'orchestration et le management ne sont pas encore complètement standardisés, et les standards prévoient dans certains cas plusieurs scénarios possibles de mise en oeuvre. Ainsi, beaucoup d'énergie est dépensée par les fournisseurs et/ou les clients de WS pour s'adapter aux choix faits par leurs partenaires et réussir leur mise en relation. De plus, ce travail d'intégration et d'adaptation n'est généralement pas considéré comme relevant du coeur du métier du fournisseur/client du service.

Un autre inconvénient est que le client de WS doit rechercher par lui-même les WS de fournisseurs sans forcément disposer de critères de sélection, notamment en termes de QoS (qualité de service). Par exemple, un même Web service proposé par deux fournisseurs distincts ne fournit pas nécessairement la même qualité de service d'un fournisseur à un outre, et le client n'a pas la possibilité d'obtenir ce genre d'information.

En effet, même si une tellé information était entrée par le fournisseur dans un annuaire UDDI public, il n'y aurait aucune garantie quant à la véracité ou la fiabilité de cette information dans la mesure où le rôle de l'annuaire UDDI s'arrête à la présentation du service et ne surveille pas la consommation réelle du service. Un autre aspect non pris en compte par un annuaire UDDI est celui du niveau de confiance qu'un client peut avoir dans le fournisseur qu'il trouve dans l'annuaire (et réciproquement le fournisseur contacté par le client n'a aucun moyen d'évaluer le niveau de confiance qu'il peut accorder à ce nouveau client).

Par ailleurs, si l'annuaire UDDI est capable de lister les services répondant à tel ou tel critère et d'apporter les informations permettant de mettre en oeuvre ces différents services, il n'en reste pas moins que la mise en relation effective n'est pas forcément possible. Dans la plupart des cas, ceci est dû à des contraintes particulières d'utilisation liées à la sécurité (par exemple récupération de certificats, de login et mot de passe), aux aspects commerciaux (par exemple détermination du mode de paiement, du tarif).

US 2004/0030627 décrit un système, le Web Service Broker, qui permet d'offrir sous forme de Web service des ressources existantes d'une entreprise (par exemple un objet logiciel EJB) et qui permet de gérer les actions (publication) ainsi que les échanges d'un tel Web service offert avec un client (souscription, invocation) et un annuaire (enregistrement). Le Web Service Broker permet en outre d'agréger plusieurs Web Services dans un nouveau. Web Service offert par lé Web Service Broker.

WO 00/77653 décrit un système comprenant un moteur de Web services et un répertoire de Web services. Ce système est adapté pour créer des web services et pour gérer l'interface entre les utilisateurs du système et les Web services ainsi créés.

Le document « QCWS : An Implementation of QoS-Capable Multimédia Web Services » (Chen et al., Proceedings of the IEEE Fifth International Symposium on Multimedia Software Engineering (ISMSE'03)) décrit une plate-forme interfacée entre des serveurs fournisseur de Web service et des clients. Suite à la réception d'une requête envoyée par un client comportant des mots clefs indiquant la nature du service souhaité, le Broker retourne en réponse au client une liste de Web service pertinents associés chacun à leurs paramètres de QoS extraits d'une base locale au Broker. Le client choisit un paramètre de QoS qui lui convient et le transmet au Broker, qui sélectionne un service en fonction de ce paramètre QoS et qui contacte le serveur correspondant au service sélectionné pour négocier une transaction supplémentaire. Si le nombre de clients maximum accepté pour le service par le serveur n'est pas atteint, le serveur transmet au Broker son accord. Le serveur fait alors une réservation pour le client supplémentaire et transmet au Broker un identifiant de réservation. Cet identifiant est transmis ensuite par le Broker au client. Puis le client invoque ensuite directement le Web service auprès du serveur en indiquant l'identifiant de réservation. La transaction relative au Web Service a lieu entre le client et le serveur. Une fois cette transaction terminée, le client adresse au Broker des données relatives à la QoS collectées pendant la transaction.

Un but de la présente invention est de pallier ces différentes limitations de l'art antérieur.

L'invention propose ainsi un procédé de médiation entre des fournisseurs de Web service (WSP, "Web Service Provider") et des clients de Web service (WSC, "Web Service Customer") tel qu'énoncé dans la revendication 1. Des modes de réalisation du procédé sont définis dans les revendications 2 à 15.

Un autre aspect de la présente invention se rapporte à la plate-forme de médiation intervenant dans le procédé ci-dessus selon la revendication 16.

L'accès aux différentes fonctionnalités de la plate-forme de médiation est réservé aux fournisseurs et clients enregistrés, ce qui renforce la sécurité. Les profils permettent à chacun des utilisateurs de disposer de fonctionnalités de la plate-forme adaptées à ses besoins. Grâce à l'étape d'enregistrement, le WSP reste maître de la manière dont il souhaite rendre disponibles les services.

La plate-forme de médiation permet avantageusement au WSP et au WSC de communiquer entre eux de manière transparente. De ce fait, ils n'ont pas à gérer les contraintes techniques de communication avec des entités variées. Il suffit que cette variété soit prise en charge par la ptate-forme, qui assure les traductions requises.

La technique proposée est ouverte aux standards de communication. Elle fonctionne a priori sur tout type de réseau de communication. Elle permet d'apporter un certain nombre d'améliorations, par exemple en termes de garantie ou de contrôle de qualité de service, de facilité d'intégration de WS pour les clients et fournisseurs, de limitation des efforts hors coeur de métier à faire pour proposer leurs WS ou utiliser des WS tiers, de facilité de mise en relation clients/fournisseurs.

D'autres particularités et avantages de la présente invention apparaîtront dans la description ci-après d'exemples de réalisation non limitatifs, en référence aux dessins annexés, dans lesquels:
- la figure 1 est un schéma illustrant une architecture de communication entre un WSP, un WSC et une plate-forme de médiation selon l'invention;
- la figure 2 est un schéma synoptique d'une plate-forme de médiation; et
- la figure 3 est un diagramme illustrant différentes fonctionnalités d'une plate-forme selon l'invention.

Le WSC est en général une entité ou une application souhaitant intégrer des services sous forme de WS, c'est-à-dire utiliser des services dont elle n'est pas elle-même pourvue. Le WSP est en général une entité ou une application fournissant des services sous la forme de WS.

La plate-forme de médiation (PFM) selon l'invention est positionnée dans un réseau de communication RC auquel sont reliés les WSP et les WSC. Le réseau de communication RC est par exemple l'Internet, un Intranet ou une combinaison d'Internet et d'Intranet.

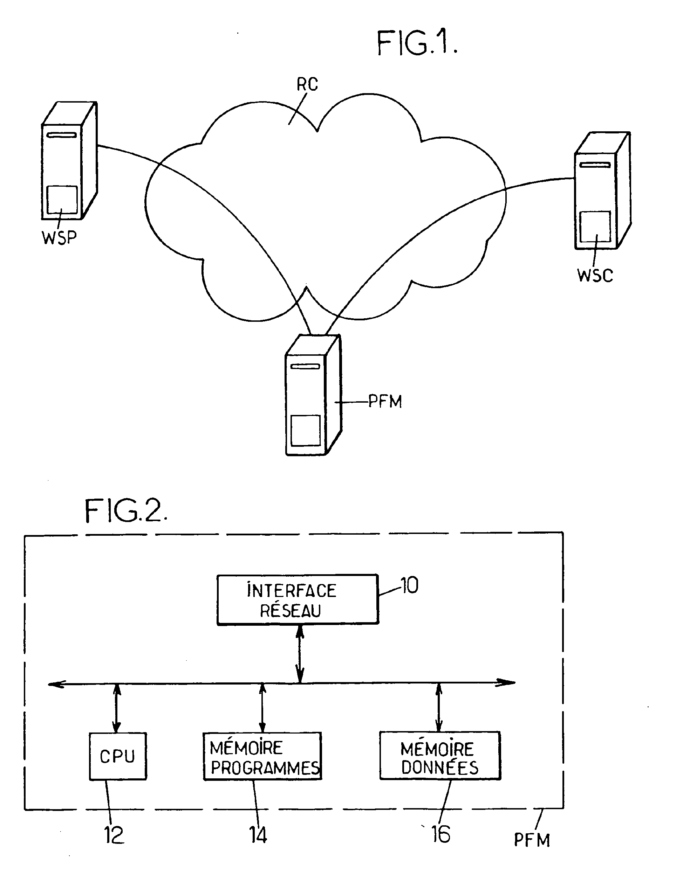

Le WSP et le WSC sont représentés chacun comme une seule machine sur la figure 1 par commodité de représentation. Les échanges ont lieu essentiellement entre applications plutôt qu'entre une application et un utilisateur final. On comprendra que souvent, le WSP et le WSC comprendront chacun un ensemble d'ordinateurs reliés en réseau. Du côté du WSP, certains de ces ordinateurs hébergent les WS mis à disposition, d'autres (ou les mêmes) peuvent servir de terminal d'utilisateur pour l'interaction entre l'utilisateur fournisseur et la PFM, et par exemple un routeur se trouve à l'interface avec l'extérieur. Typiquement, chaque WS est désigné par un URL ("Uniform Resource Locator") permettant de l'adresser dans le domaine du WSP. Du côté du WSC, certains des ordinateurs peuvent héberger des applications faisant appel à des WS, d'autres (ou les mêmes) peuvent servir de terminal d'utilisateur pour l'interaction entre l'utilisateur client et la PFM, et par exemple un routeur se trouve à l'interface avec l'extérieur.

Suivant l'invention, un WSP (respectivement WSC) peut n'être capable de ne communiquer qu'avec la PFM pour pouvoir coopérer avec de multiples WSC (respectivement WSP). La PFM joue le rôle d'une interface de communication entre les différents acteurs intervenant dans les WS. Le WSP et le WSC communiquent ainsi entre eux quels que soient leurs plates-formes matérielles et leurs systèmes d'exploitation (par exemple Solaris, Unix, etc...), quel que soit le langage d'écriture des applications (par exemple Java, C, etc...) et quels que soient les protocoles de communication qu'ils supportent. La PFM se charge de gérer les contraintes techniques de compatibilité pour établir deux trajets de communication, l'un avec le WSP, l'autre avec le WSC. Mis bout à bout, ces deux trajets offrent une liaison transparente pour le WSP et le WSC.

Avantageusement, les trajets de communication entre la PFM et le WSP et entre la PFM et le WSC sont sécurisés selon des standards en vigueur comme par exemple WS Security.

Les terminaux d'utilisateur du WSP et du WSC incluent chacun un logiciel de navigation (par exemple Netscape, Internet Explorer, etc...) mettant en oeuvre des protocoles de transfert classiques tels que HTTP ("Hypertext Transfer Protocol") ou FTP ("File Transfer Protocol") pour accéder à une interface graphique fournie par la plate-forme de médiation.

L'interface graphique est libre d'accès sous forme d'un site Internet organisé en pages écrites dans un langage de description tel que HTML ("HyperText Markup Language"). Ce site sera généralement sécurisé par des outils de contrôle d'accès et de chiffrement pour une partie de l'enregistrement. L'interface graphique permet au WSP et au WSC de s'enregistrer auprès de la PFM pour accéder à ses différentes fonctionnalités décrites plus loin. Une partie de la configuration/inscription peut aussi se faire via une interface WS.

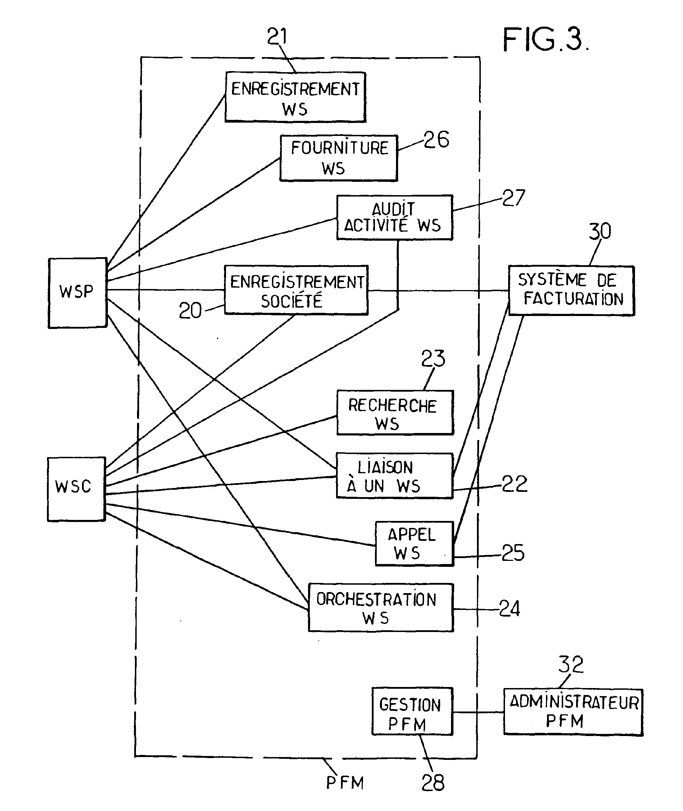

En référence à la figure 2, la PFM comprend une interface d'entrée/sortie 10 pour communiquer à travers le réseau RC, notamment avec les WSC et WSP, une unité centrale de traitement (CPU, "Central Processing Unit") 12 pour exécuter les fonctionnalités et services rendus par la PFM, et des mémoires 14, 16 pour contenir d'une part les programmes mettant en oeuvre les modules logiciels 20-28 illustrés par la figure 3, à exécuter par le CPU 12, et d'autre part les données utiles à ces programmes, notamment les profils d'utilisateur des WSP et WSC, l'annuaire des WS mis à disposition, les données descriptives des formats supportés pour les interfaces de communication, les pages HTML de l'interface graphique, etc.

Dans une première étape du procédé selon l'invention, le WSC et le WSP s'enregistrent auprès de la plate-forme de médiation pour mettre en place des profils d'utilisateur dans la PFM. Ces profils permettent notamment de paramétrer l'authentification des utilisateurs de la PFM et des fonctions de contrôle d'accès de chacun des utilisateurs de la plate-forme de médiation PFM. LA notion d'utilisateur doit ici s'entendre au sens large: l'utilisateur est une personne pour les fonctions accessibles par une interface homme-machine HTML alors que c'est une application pour les applications accessibles par WS.

La PFM dispose d'une interface libre d'accès sous forme d'un site Web destiné à un humain, ou sous forme d'un WS destiné à l'application d'un WSP ou WSC. Cette interface permet au WSP (ou WSC) d'obtenir des informations sur les services offerts par la PFM, de parcourir l'annuaire des services disponibles sur la PFM, du moins des services en accès tout public, et de s'enregistrer sur la PFM afin de pouvoir accéder aux fonctionnalités de la PFM.

L'étape d'enregistrement initial du WSP ou du WSC se fait en trois temps, sous le contrôle du module 20 de la PFM: (1) enregistrement minimum de paramètres obligatoires (informations nécessaires à identifier le WSP ou WSC, adresse de messagerie électronique, etc.); (2) vérification de ces paramètres par la PFM (validité de l'adresse de messagerie, vérification d'adresse postale, authentification par cryptographie, etc.), pouvant comprendre une vérification physique par un opérateur (contrôle de pièces d'identité, statuts, etc.); (3) établissement d'une connexion sécurisée, utilisant les standards en vigueur, comme par exemple SSL ("Secure Socket Layer"). Cette connexion sécurisée permet de poursuivre l'enregistrement des informations sur le WSP ou le WSC ainsi que les interactions ultérieures avec la PFM, en assurant le cas échéant la confidentialité des données échangées. Au cours de l'enregistrement initial, le WSP (ou le WSC) fournit un certain nombre d'informations sur lui (nom de la société, nom du contact, adresse, catégorie de société, etc.). Les vérifications effectuées par la PFM interviennent dans la construction du profil du nouvel inscrit, notamment de son niveau de confiance.

Au cours de l'enregistrement, le WSC et le WSP échangent avec la PFM, par l'intermédiaire de leur connexion sécurisée respective, des données destinées à compléter leur profil utilisateur comme par exemple:
- les fonctionnalités de la plate-forme de médiation PFM qu'ils souhaitent utiliser;
- leur relevé d'identité bancaire pour la facturation du service rendu par la plate-forme de médiation PFM. Cette facturation incombe à un système de facturation 30 qui peut être externe à la PFM comme dans l'exemple de la figure 3;
- le mode de paiement; ...

Une fois enregistré, le WSP déclare le(s) service(s) qu'il souhaite proposer, en indiquant des données de configuration telles que le nom du service, son type, sa fonction, une description, une catégorie de WS, ... Il précise la qualité de service qu'il est en mesure d'assurer, par exemple en termes de délai de réponse, de nombre maximum de réponses par seconde.

Les données de configuration peuvent également comprendre des données de contrôle d'accès au service, en particulier le(s) client(s) WSC autorisé(s) à utiliser le service sur la base de critères comme par exemple la santé financière du WSC ou la catégorie du WSC. Ceci permet éventuellement de définir des services à accès restreint à un nombre déterminé de clients (services "gold").

Avantageusement, si le WSP ne connaît pas a priori certaines des informations sur la qualité de service, la PFM lui fournit des moyens de test pour les évaluer. Ces moyens sont d'autant plus fiables et précis que le WSP accepte que la PFM soit plus intrusive (par exemple poser une sonde de mesure en sortie du serveur de WS du WSP, fournir au WSP le moyen de faire un appel à son propre WS en passant par la PFM et mettre à sa disposition les mesures relevées par la sonde).

Le WSP dispose ainsi d'un environnement de test du WS qu'il souhaite mettre à disposition. Cet environnement permet au WSP de:
- vérifier le bon fonctionnement du WS avec un client fictif proposé par la PFM, évitant ainsi à un premier client des déboires éventuels avec le WS offert;
- se mettre en conformité avec les contraintes techniques (même faibles) de la PFM;
- vérifier que les déclarations faites lors de l'étape d'enregistrement (par exemple sur le délai de réponse) peuvent être atteintes réellement, ou, au contraire, s'il n'a rien encore précisé à ce sujet, d'effectuer des mesures permettant de déterminer les paramètres de qualité de service auxquels le WSP peut prétendre.

Une fois ces tests effectués, le module 21 de la PFM procède à l'enregistrement du WS proposé par le WSP. Au cours de cette étape, le WSP peut choisir le type de WSC qui sera autorisé à utiliser son WS. Cela peut aller d'un référencement pour tout WSC, à un référencement pour les WSC possédant tel ou tel profil, voire uniquement pour un WSC particulier.

Par la suite, le WSP pourra venir modifier les informations saisies. La PFM se charge alors de l'analyse d'impact des modifications et de la cohérence des données. Les modifications pourront dans certains cas être immédiatement prises en compte, et dans d'autres cas être soumises à des accords reçus d'un ou plusieurs WSC. Par exemple, l'augmentation d'un temps de réponse alors qu'un WSC s'attend à un temps de réponse inférieur nécessite un accord préalable ou un arrêt de l'utilisation de ce WS par ce WSC. La PFM est garante de cette cohérence. Au besoin, elle adresse une notification au(x) WSC concerné(s) par la modification.

Le WSP pourra également venir déclarer d'autres WS ou modifier les URL d'accès aux WS. Un avantage procuré par la PFM est que la modification d'URL peut être transparente pour les WSC utilisant ce WS.

La plate-forme de médiation PFM complète le profil d'utilisateur du WSP en stockant dans une base sécurisée de données les informations associées au WSP, notamment les WS qu'il met à disposition via la PFM, les informations associées de qualité de service et les clients WSC autorisés à les utiliser.

Les différents services enregistrés sont répertoriés dans un annuaire de WS. Dans cet annuaire, les WS mis à disposition par les WSP sont classés en fonction de diverses taxonomies: profils d'utilisateurs, catégories liées à un ou plusieurs domaines UNSPCS ("Universal Standard for Products and Services Classification"), avec des critères tels que leur fonction, leur qualité de service, leur prix, ...

Avant de pouvoir passer à la phase d'exploitation du WS, un WSC commence par une phase de liaison au WS, supervisée par le module 22 de la PFM. Une fois enregistré, le WSC parcourt au moyen d'une interface graphique (interface HTML) ou d'une interface WS l'annuaire de services proposé par la PFM (module 23). Cet annuaire présente les informations techniques décrivant les services et permettant au WSC de mettre en place le lien avec le WS. La PFM complète ces informations avec des critères de qualité de service tels que par exemple des temps moyens de réponse, des informations sur la disponibilité du WS, et des informations d'ordre commercial (tarif, type de facturation supporté, ...). L'annuaire dispose d'une interface de recherche multicritères et d'une catégorisation des services. Il affiche une vue des WS dépendant du profil du WSC enregistré et des préférences précisées par les WSP (par exemple, un WSP peut avoir précisé que son WS ne devait être vu que par un WSC donné).

Une fois un WS trouvé, le WSC entre dans la phase de liaison au WS. Dans un premier temps, il dispose d'un environnement de test offert par la PFM. Cet environnement permet au WSC d'intégrer le WS à sa propre application et de le tester en utilisant la PFM comme un WSP virtuel, c'est-à-dire se comportant comme un WSP au niveau de l'interface, mais ne fournissant pas le service réel. Le WSP est ainsi déchargé de ces tests et de la mise en place d'un environnement pour chaque nouveau WSC. Si les tests ne sont pas validés, la PFM ne propose pas au WSC la possibilité d'utiliser le WS réel

Une fois ces tests effectués et validés, le WSC est enregistré comme client du WS. La PFM lui offre alors la possibilité de basculer quand il le souhaite, de façon transparente, sur le WS réel ou de revenir sur le WS de test proposé par la PFM. En effet, la PFM offre au WSC la même interface de WS et contrôle le WS réellement appelé. En se connectant à la PFM, le WSC a la possibilité de décider s'il veut faire un appel à un WS de test ou au WS réel. La PFM dirigera la requête vers le WS de test ou le véritable WS situé sur le serveur du WSP.

Si le WSC ne trouve pas un WS répondant à ses exigences, il peut les exprimer auprès de la PFM. Cette expression se fait par exemple en langage naturel. L'administrateur de la PFM essaie alors de trouver un autre WSP susceptible de répondre à la demande. Il peut aussi répondre à cette demande en construisant un nouveau WS résultant d'une combinaison de plusieurs WS disponibles sur la PFM. Cette combinaison est mise en oeuvre par le module d'orchestration 24 représenté sur la figure 3.

La PFM met aussi à disposition d'un WSC une interface graphique lui permettant de spécifier son besoin en décrivant directement la combinaison des WS qui l'intéresse. Le module 24 se charge alors d'orchestrer les WS spécifiés.

Après la phase de liaison du WSC à un WS, le WS peut être appelé par le WSC (module 25), et le service rendu par le WSP (module 26). L'interface entre ces deux modules 25, 26 assure les traductions requises compte tenu des formats de communication spécifiés dans les profils d'utilisateur du WSP et du WSC. Dans cette phase d'exploitation du WS par le WSC, la PFM peut apporter un certain nombre de fonctionnalités intéressantes:
- comptage des appels et transmission des informations nécessaires au système de facturation 30 pour le paiement du service. Les informations transmises et le système de facturation contacté dépendent des préférences exprimées par le WSP et le WSC et enregistrées dans leurs profils respectifs ;
- aiguillage des appels. L'aiguillage de base consiste à rediriger les appels faits sur la PFM vers les WSP après avoir réalisé un contrôle d'accès. Cet aiguillage peut aussi dépendre de paramètres tels qu'une version spécifique du WS d'un WSP, la catégorie ("gold" ou autre) d'un WS réservé à des WSC spécifiques, la charge d'un serveur ;
- isolement d'un WSP par rapport à un WSC. En complément de l'isolement qui est apporté pendant les tests décrits précédemment, il existe un aspect isolement dans le cadre de l'exploitation. Certaines modifications réalisées par le WSP sur la façon d'appeler un WS peuvent être masquées par la PFM, par exemple une modification de l'URL d'accès du côté du WSP ;
- contrôle de la qualité de service. La PFM vérifie la qualité de service, en particulier si le service a bien été rendu, si les temps de réponse annoncés ont été respectés, ... Lorsque les niveaux de qualité de service s'approchent des limites fixées, la PFM peut essayer d'apporter des améliorations si elle en est capable, par exemple en reroutant les requêtes vers d'autres serveurs si le WSP a déclaré plusieurs serveurs lors de la phase d'enregistrement de son WS. Au besoin, elle notifie le risque de dépassement des limites aux utilisateurs concernés. En cas d'erreur, la PFM peut renvoyer un message d'erreur plus explicite que ce que l'on peut habituellement espérer, par exemple en utilisant la messagerie électronique ou un service de SMS, afin que les utilisateurs concernés prennent les mesures correctives qui s'imposent. Le niveau d'information dépend ici aussi du niveau d'intrusion accepté de la part de la PFM par rapport aux WSP et WSC;
- fonctions de notarisation. La PFM peut apporter des preuves en cas de contestation entre WSP et WSC. Pour cela, elle peut au besoin faire appel à un certificateur indépendant;
- autres fonctions d'audit assurées par le module 27. Les appels et les réponses aux WS sont passés en historique, remis en forme et rendus disponibles aux WSC et WSP, selon leurs préférences déclarées dans les phases d'enregistrement. Ces informations sont rendues disponibles par divers moyens (par exemple interface Web HTML, interface WS) et peuvent être différenciées, y compris au sein d'une même entité. Ces informations ont plusieurs rôles: elle permettent par exemple au WSP de vérifier qui utilise son ou ses WS, à quel moment ou dans quelles circonstances le WS est proche des limites d'utilisation dans le cadre de la qualité de service déclarée. Elles permettent aussi de suivre la consommation d'un WS particulier et de savoir, le cas échéant, s'il ne faut pas revoir le mode de paiement choisi (par exemple paiement par abonnement plutôt qu'à l'acte);
- fonctions de gestion de versions des WS. Le WSP peut disposer de plusieurs versions d'un même WS. La PFM pourra rediriger les appels des WSC vers la bonne version du WS, prévenir les WSC qu'une nouvelle version est disponible et mettre à leur disposition un environnement de test de la nouvelle interface, renseigner les WSP sur l'utilisation de ces versions de WS par les WSC ainsi que de leur migration effective vers les nouvelles versions.

Ces fonctionnalités assurées par la PFM nécessitent une intervention humaine notamment pour les configurer et pour vérifier leur bonne exécution. Cette supervision est assurée par un administrateur de la PFM au moyen d'un module 28 de gestion de la PFM.

La PFM accorde un niveau de confiance selon le mode d'enregistrement qui a été choisi par le client/fournisseur (selon le mode choisi, la PFM réalise des vérifications minimales portant par exemple sur une adresse de messagerie, ou des vérifications organisationnelles par exemple sur l'existence d'une société). A posteriori, elle recueille les "plaintes" éventuelles des clients/fournisseurs et peut donc affiner le niveau de confiance attribué à un partenaire.

La PFM surveille les échanges entre partenaires, et est donc capable de faire des mesures de performance et QoS. Elle peut apporter ces informations dans l'annuaire mis à disposition des partenaires et garantir ces informations.

La PFM offre aux partenaires un moyen de s'enregistrer, donner leurs préférences/informations/choix en termes de paiement, sécurité, etc. Ceci est effectué une seule fois tout en pouvant adresser divers partenaires. C'est la PFM qui utilisera les informations, mettra en oeuvre les éléments de sécurité, et proposera les choix aux partenaires qui voudront établir des liens avec d'autres partenaires lors des étapes d'enregistrement et d'établissement de liaison. Elle sert en quelque sorte d'intermédiaire entre partenaires, apportant un certain nombre de garanties et de fonctionnalités, pour faciliter leur mise en relation initiale et le suivi de leur relation dans le temps.

Dans le cadre de l'orchestration de service, la PFM permet aussi de faciliter les mises en relation multiples qui sont alors nécessaires (un client devrait sans la PFM négocier avec chaque fournisseur, s'adapter à chacun d'eux, ...).

## Revendications

1. Procédé de médiation entre des fournisseurs de Web service (WSP) et des clients de Web service (WSC) à travers un réseau de communication (RC), le procédé étant mis en oeuvre par une plate-forme de médiation liée audit réseau et comprenant les étapes suivantes:
- enregistrer au moins un fournisseur de Web service auprès de la plate-forme de médiation (PFM) reliée au réseau;
- obtenir du fournisseur des données de configuration d'au moins un Web service que le fournisseur met à disposition par l'intermédiaire de la plate-forme de médiation, les données de configuration comprenant des données d'identification et d'adressage du service et des données de contrôle d'accès au service, et la plate-forme obtenant des informations sur la qualité de service que le fournisseur est capable d'assurer;
- enregistrer au moins un client de Web service auprès de la plate-forme pour définir un profil de client;
- présenter au client des Web services accessibles en fonction de son profil de client;
- sélectionner un des Web services mis à disposition, en fonction d'informations de sélection reçues du client; et
- établir une liaison entre le client et le Web service sélectionné qui est mis en oeuvre par un serveur du fournisseur, ladite liaison passant par la plate-forme de médiation.

2. Procédé selon la revendication 1, comprenant en outre une étape de suivi d'exploitation du service par la plate-forme de médiation via la liaison établie.

3. Procédé selon la revendication 2, dans lequel le suivi d'exploitation du service par la plate-forme de médiation comporte un comptage des appels du client au service et une transmission d'informations résultantes à un système de facturation.

4. Procédé selon l'une quelconque des revendications 2 à 3, dans lequel le suivi d'exploitation du service par la plate-forme de médiation comporte un audit dans lequel les appels au service et les réponses du service sont stockés dans une base de données sous la forme d'un historique accessible par le client et/ou le fournisseur de Web service.

5. Procédé selon l'une quelconque des revendications 2 à 4, dans lequel le suivi d'exploitation du service par la plate-forme de médiation comporte une notarisation dans laquelle la plate-forme de médiation enregistre des preuves d'exploitation du service en cas de contestation entre le fournisseur et le client de Web service.

6. Procédé selon l'une quelconque des revendications 2 à 5, dans lequel le suivi d'exploitation du service par la plate-forme de médiation comporte un contrôle de la qualité de service procurée par le fournisseur de Web service.

7. Procédé selon l'une quelconque des revendications 2 à 6, dans lequel le suivi d'exploitation du service par la plate-forme de médiation comporte des fonctions de gestion de versions multiples du service Web.

8. Procédé selon l'une des revendications précédentes, dans lequel l'étape d'enregistrement d'un fournisseur de Web service auprès d'une plate-forme de médiation comprend l'envoi du fournisseur à la plate-forme de paramètres d'identification pour l'établissement d'une connexion sécurisée avec la plate-forme.

9. Procédé selon l'une quelconque des revendications précédentes, comprenant une étape de construction dans la plate-forme d'un annuaire de Web services mis à disposition, sur la base des données d'identification et d'adressage, des informations de qualité de service et des données de contrôle d'accès reçues de chaque fournisseur de Web service.

10. Procédé selon la revendication 9, dans lequel la présentation de services au client de Web service comprend une extraction d'une partie de l'annuaire en fonction du profil de client défini dans l'étape d'enregistrement du client de Web service auprès de la plate-forme.

11. Procédé selon l'une quelconque des revendications précédentes, dans lequel les données de configuration comprennent des informations sur la qualité de service.

12. Procédé selon l'une quelconque des revendications précédentes, dans lequel l'étape de configuration du Web service comprend la présentation au fournisseur par la plate-forme de médiation d'un environnement de test pour l'évaluation des informations sur la qualité de service.

13. Procédé selon l'une quelconque des revendications précédentes, comprenant en outre une étape de test du service sélectionné par le client de Web service, au cours de laquelle, la plate-forme de médiation présente un environnement de test simulant le service sélectionné sans avoir établi la liaison avec le fournisseur de Web service.

14. Procédé selon la revendication 13, dans lequel le client de Web service est apte à basculer sur l'environnement de test présenté par la plate-forme de médiation ou le service réel mis à disposition par le fournisseur de Web service.

15. Procédé selon l'une quelconque des revendications précédentes, comprenant en outre une étape d'orchestration, par la plate-forme de médiation, d'un service demandé par un client de Web service en combinant des services mis à disposition par au moins un fournisseur de Web service.

16. Plate-forme de médiation entre des fournisseurs de Web services (WSP) et des clients de Web service (WSC) à travers un réseau de communication (RC), comprenant :
- des moyens (10) d'interface avec le réseau;
- des moyens (20) d'enregistrement d'au moins un fournisseur de Web service;
- des moyens (21) pour obtenir du fournisseur des données de configuration d'au moins un Web service que le fournisseur met à disposition par l'intermédiaire de la plate-forme de médiation, les données de configuration comprenant des données d'identification et d'adressage du service et des données de contrôle d'accès au service, et pour obtenir des informations sur la qualité de service que le fournisseur est capable d'assurer;
- des moyens (20) d'enregistrement d'au moins un client de Web service pour définir un profil de client;
- des moyens (23) de présentation au client de Web services accessibles en fonction de son profil de client ;
- des moyens (23) pour sélectionner un des Web services accessibles mis à disposition, en fonction d'informations de sélection reçues du client; et
- des moyens (22) d'établissement d'une liaison entre le client et le Web service sélectionné qui est mis en oeuvre par un serveur du fournisseur, ladite liaison passant par la plate-forme de médiation.

17. Plate-forme de médiation selon la revendication 16, comprenant en outre des moyens de suivi d'exploitation du service via la liaison établie.

18. Plate-forme de médiation selon la revendication 16 ou 17, dans lequel les moyens d'enregistrement sont agencés pour recevoir d'un fournisseur de Web service des paramètres d'identification pour l'établissement d'une connexion sécurisée avec la plate-forme.

19. Plate-forme de médiation selon l'une quelconque des revendications 16 à 18, comprenant des moyens de construction d'un annuaire de Web services mis à disposition, sur la base des données d'identification et d'adressage, des informations de qualité de service et des données de contrôle d'accès reçues de chaque fournisseur de Web service.

20. Plate-forme de médiation selon l'une quelconque des revendications 16 à 19, dans lequel les moyens de configuration du Web service comprennent des moyens de présentation au fournisseur d'un environnement de test pour l'évaluation des informations sur la qualité de service.

21. Plate-forme de médiation selon l'une quelconque des revendications 16 à 20, comprenant en outre des moyens de test du service sélectionné par le client de Web service, pour présenter un environnement de test simulant le service sélectionné sans que soit établie la liaison avec le fournisseur de Web service.

22. Plate-forme de médiation selon l'une quelconque des revendications 16 à 21, comprenant en outre des moyens d'orchestration d'un service demandé par un client de Web service en combinant des services mis à disposition par au moins un fournisseur de Web service.

## Claims

1. Method of mediation between web service providers (WSP) and web server customers (WSC) via a communication network (CN), the method being implemented by a mediation platform linked to said network and comprising the following steps:
- registering at least one web service provider with the mediation platform (PFM) linked to the network;
- obtaining from the provider configuration data for at least one web service that the provider makes available via the mediation platform, the configuration data comprising service identification and addressing data and service access control data, and the platform obtaining information on the quality of service that the provider is capable of providing;
- registering at least one web service customer with the platform to define a customer profile;
- presenting to the customer web services accessible according to its customer profile;
- selecting one of the web services made available, according to selection information received from the customer; and
- setting up a link between the customer and the selected web service which is implemented by a server of the provider, said link passing via the mediation platform.

2. Method according to Claim 1, also comprising a step for monitoring service operation by the mediation platform via the established link.

3. Method according to Claim 2, in which the monitoring of service operation by the mediation platform includes keeping a count of the calls from the customer to the service and transmitting resultant information to a billing system.

4. Method according to either of Claims 2 and 3, in which the monitoring of service operation by the mediation platform includes an audit in which the calls to the service and the responses from the service are stored in a database in the form of a history that can be accessed by the web service customer and/or provider.

5. Method according to any one of Claims 2 to 4, in which the monitoring of service operation by the mediation platform includes a notarization in which the mediation platform records proofs of operation of the service in case of dispute between the web service provider and customer.

6. Method according to any one of Claims 2 to 5, in which the monitoring of service operation by the mediation platform includes a check on the service quality achieved by the web service provider.

7. Method according to any one of Claims 2 to 6, in which the monitoring of service operation by the mediation platform includes functions for managing multiple versions of the web service.

8. Method according to one of the preceding claims, in which the step for registering a web service provider with a mediation platform comprises sending from the provider to the platform identification parameters in order to establish a secure connection with the platform.

9. Method according to any one of the preceding claims, comprising a step for constructing in the platform a directory of web services made available, on the basis of identification and addressing data, quality of service information and access control data received from each web service provider.

10. Method according to Claim 9, in which the presentation of services to the web service customer includes extraction of a part of the directory according to the customer profile defined in the step for registering the web service customer with the platform.

11. Method according to any one of the preceding claims, in which the configuration data include quality of service information.

12. Method according to any one of the preceding claims, in which the web service configuration step includes the presentation to the provider by the mediation platform of a test environment for assessing the quality of service information.

13. Method according to any one of the preceding claims, further comprising a step for testing the service selected by the web service customer, during which the mediation platform presents a test environment simulating the selected service without having set up the link with the web service provider.

14. Method according to Claim 13, in which the web service customer is able to switch to the test environment presented by the mediation platform or the actual service made available by the web service provider.

15. Method according to any one of the preceding claims, further comprising a step for the orchestration, by the mediation platform, of a service requested by a web service customer by combining services made available by at least one web service provider.

16. Mediation platform between web service providers (WSP) and web service customers (WSC) via a communication network (CN), comprising:
- means (10) for interfacing with the network;
- means (20) for registering at least one web service provider;
- means (21) for obtaining from the provider configuration data for at least one web service that the provider makes available via the mediation platform, the configuration data comprising service identification and addressing data and service access control data, and for obtaining information on the quality of service that the provider is capable of providing;
- means (20) for registering at least one web service customer to define a customer profile;
- means (23) for presenting to the customer services accessible according to its customer profile;
- means (23) for selecting one of the web services made available, according to selection information received from the customer; and
- means (22) for setting up a link between the customer and the selected web service which is implemented by a server of the provider, said link passing via the mediation platform.

17. Mediation platform according to Claim 16, also comprising means for monitoring service operation via the established link.

18. Mediation platform according to Claim 16 or 17, in which the registration means are arranged to receive from a web service provider identification parameters for establishing a secure connection with the platform.

19. Mediation platform according to any one of Claims 16 to 18, comprising means for constructing a directory of web services made available, on the basis of identification and addressing data, quality of service information and access control data received from each web service provider.

20. Mediation platform according to any one of Claims 16 to 19, in which the web service configuration means include means for presenting to the provider a test environment for assessing the quality of service information.

21. Mediation platform according to any one of Claims 16 to 20, further comprising means for testing the service selected by the web service customer, to present a test environment simulating the selected service without the link with the web service provider being set up.

22. Mediation platform according to any one of Claims 16 to 21, further comprising means for the orchestration of a service requested by a web service customer by combining the services made available by at least one web service provider.

## Patentansprüche

1. Verfahren zur Vermittlung zwischen Webdienst-Anbietern (WSP) und Webdienst-Kunden (WSC) über ein Kommunikationsnetz (RC), wobei das Verfahren von einer mit dem Netz verbundenen Vermittlungsplattform durchgeführt wird und die folgenden Schritte enthält:
- Registrieren mindestens eines Webdienst-Anbieters bei der mit dem Netz verbundenen Vermittlungsplattform (PFM);
- Erhalt von Konfigurationsdaten mindestens eines Webdiensts vom Anbieter, den der Anbieter über die Vermittlungsplattform zur Verfügung stellt, wobei die Konfigurationsdaten Identifikations- und Adressierdaten des Diensts und Kontrolldaten des Zugangs zum Dienst enthalten, und die Plattform Informationen über die Dienstqualität erhält, die der Anbieter gewährleisten kann;
- Registrieren mindestens eines Webdienst-Kunden bei der Plattform, um ein Kundenprofil zu definieren;
- dem Kunden in Abhängigkeit von seinem Kundenprofil zugängliche Webdienste präsentieren;
- Auswählen eines der zur Verfügung gestellten Webdienste in Abhängigkeit von vom Kunden empfangenen Auswahlinformationen; und
- Aufbau einer Verbindung zwischen dem Kunden und dem ausgewählten Webdienst, die von einem Server des Anbieters durchgeführt wird, wobei die Verbindung über die Vermittlungsplattform geht.

2. Verfahren nach Anspruch 1, das außerdem einen Schritt der Nutzungsüberwachung des Diensts durch die Vermittlungsplattform über die aufgebaute Verbindung enthält.

3. Verfahren nach Anspruch 2, bei dem die Nutzungsüberwachung des Diensts durch die Vermittlungsplattform ein Zählen der Anrufe des Kunden beim Dienst und eine Übertragung von resultierenden Informationen an ein Rechnungsstellungssystem enthält.

4. Verfahren nach einem der Ansprüche 2 bis 3, bei dem die Nutzungsüberwachung des Diensts durch die Vermittlungsplattform ein Audit enthält, in dem die Anrufe beim Dienst und die Antworten des Diensts in einer Datenbank in Form eines chronologischen Überblicks gespeichert werden, der für den Webdienst-Kunden und/oder -Anbieter zugänglich ist.

5. Verfahren nach einem der Ansprüche 2 bis 4, bei dem die Nutzungsüberwachung des Diensts durch die Vermittlungsplattform eine Notarisierung aufweist, bei der die Vermittlungsplattform Nutzungsbeweise des Diensts für den Fall einer Anfechtung zwischen dem Webdienst-Anbieter und dem Webdienst-Kunden speichert.

6. Verfahren nach einem der Ansprüche 2 bis 5, bei dem die Nutzungsüberwachung des Diensts durch die Vermittlungsplattform eine Kontrolle der vom Webdienst-Anbieter bereitgestellten Dienstqualität aufweist.

7. Verfahren nach einem der Ansprüche 2 bis 6, bei dem die Nutzungsüberwachung des Diensts durch die Vermittlungsplattform Verwaltungsfunktionen vieler Versionen des Web-Diensts aufweist.

8. Verfahren nach einem der vorhergehenden Ansprüche, bei dem der Schritt der Registrierung eines Webdienst-Anbieters bei einer Vermittlungsplattform das Senden vom Anbieter an die Plattform von Identifikationsparametern für den Aufbau einer gesicherten Verbindung mit der Plattform enthält.

9. Verfahren nach einem der vorhergehenden Ansprüche, das einen Schritt der Herstellung, in der Plattform, eines Verzeichnisses von zur Verfügung gestellten Webdiensten auf der Basis der Identifikations- und Adressierdaten, der Dienstqualitätsinformationen und der Zugangskontrolldaten enthält, die von jedem Webdienst-Anbieter empfangen werden.

10. Verfahren nach Anspruch 9, bei dem das dem Webdienst-Kunden Präsentieren von Diensten eine Entnahme eines Teils des Verzeichnisses in Abhängigkeit von dem im Schritt der Registrierung des Webdienst-Kunden in der Plattform definierten Kundenprofil enthält.

11. Verfahren nach einem der vorhergehenden Ansprüche, bei dem die Konfigurationsdaten Informationen über die Dienstqualität enthalten.

12. Verfahren nach einem der vorhergehenden Ansprüche, bei dem der Konfigurationsschritt des Webdiensts das dem Anbieter durch die Vermittlungsplattform Präsentieren einer Testumgebung für die Auswertung der Informationen über die Dienstqualität enthält.

13. Verfahren nach einem der vorhergehenden Ansprüche, das außerdem einen Schritt des Tests des vom Webdienst-Kunden ausgewählten Diensts enthält, während dem die Vermittlungsplattform eine Testumgebung präsentiert, die den ausgewählten Dienst simuliert, ohne die Verbindung mit dem Webdienst-Anbieter aufgebaut zu haben.

14. Verfahren nach Anspruch 13, bei dem der Webdienst-Kunde auf die von der Vermittlungsplattform präsentierte Testumgebung oder auf den vom Webdienst-Anbieter zur Verfügung gestellten realen Dienst umschalten kann.

15. Verfahren nach einem der vorhergehenden Ansprüche, das außerdem einen Schritt der Orchestrierung, durch die Vermittlungsplattform, eines von einem Webdienst-Kunden angeforderten Diensts enthält, indem von mindestens einem Webdienst-Anbieter zur Verfügung gestellte Dienste kombiniert werden.

16. Vermittlungsplattform zwischen Webdienst-Anbietern (WSP) und Webdienst-Kunden (WSC) über ein Kommunikationsnetz (RC), die enthält:
- Schnittstelleneinrichtungen (10) mit dem Netz;
- Einrichtungen (20) zum Registrieren mindestens eines Webdienst-Anbieters;
- Einrichtungen (21), um vom Anbieter Konfigurationsdaten mindestens eines Webdiensts zu erhalten, den der Anbieter über die Vermittlungsplattform zur Verfügung stellt, wobei die Konfigurationsdaten Identifikations- und Adressierdaten des Diensts und Zugangskontrolldaten des Diensts enthalten, und um Informationen über die Dienstqualität zu erhalten, die der Anbieter gewährleisten kann;
- Einrichtungen (20) zum Registrieren mindestens eines Webdienst-Kunden, um ein Kundenprofil zu definieren;
- Einrichtungen (23), um dem Kunden Webdienste zu präsentieren, die in Abhängigkeit von seinem Kundenprofil zugänglich sind;
- Einrichtungen (23), um einen der zur Verfügung gestellten zugänglichen Webdienste in Abhängigkeit von vom Kunden empfangenen Auswahlinformationen auszuwählen; und
- Einrichtungen (22) für den Aufbau einer Verbindung zwischen dem Kunden und dem ausgewählten Webdienst, der von einem Server des Anbieters durchgeführt wird, wobei die Verbindung über die Vermittlungsplattform geht.

17. Vermittlungsplattform nach Anspruch 16, die außerdem Einrichtungen zur Nutzungsüberwachung des Diensts über die aufgebaute Verbindung enthält.

18. Vermittlungsplattform nach Anspruch 16 oder 17, bei der die Registrierungseinrichtungen eingerichtet sind, um von einem Webdienst-Anbieter Identifikationsparameter für den Aufbau einer gesicherten Verbindung mit der Plattform zu empfangen.

19. Vermittlungsplattform nach einem der Ansprüche 16 bis 18, die Einrichtungen zur Herstellung eines Verzeichnisses von zur Verfügung gestellten Webdiensten auf der Basis der Identifikations- und Adressierdaten, der Dienstqualitätsinformationen und der von jedem Webdienst-Anbieter empfangenen Zugangskontrolldaten enthält.

20. Vermittlungsplattform nach einem der Ansprüche 16 bis 19, bei der die Konfigurationseinrichtungen des Webdiensts Einrichtungen enthalten, um dem Anbieter eine Testumgebung für die Auswertung der Informationen über die Dienstqualität zu präsentieren.

21. Vermittlungsplattform nach einem der Ansprüche 16 bis 20, die außerdem Einrichtungen zum Test des vom Webdienst-Kunden ausgewählten Diensts enthält, um eine Testumgebung zu präsentieren, die den ausgewählten Dienst simuliert, ohne dass die Verbindung mit dem Webdienst-Anbieter aufgebaut wird.

22. Vermittlungsplattform nach einem der Ansprüche 16 bis 21, die außerdem Einrichtungen zur Orchestrierung eines von einem Webdienst-Kunden angeforderten Diensts durch Kombination der von mindestens einem Webdienst-Anbieter zur Verfügung gestellten Dienste enthält.
